Europäisches Patentamt

European Patent Office

Office européen des brevets

(19)

(11) Veröffentlichungsnummer: **0 206 341**
**B1**

(12) **EUROPÄISCHE PATENTSCHRIFT**

(45) Veröffentlichungstag der Patentschrift:
30.08.89

(51) Int. Cl.⁴: **B 23 D 15/00**, B 23 D 33/10

(21) Anmeldenummer: 86108725.2

(22) Anmeldetag: 26.06.86

(54) Programmierbare Eckenschere.

(30) Priorität: 28.06.85 IT 2134685

(43) Veröffentlichungstag der Anmeldung:
30.12.86 Patentblatt 86/52

(45) Bekanntmachung des Hinweises auf die Patenterteilung: 30.08.89 Patentblatt 89/35

(84) Benannte Vertragsstaaten:
AT BE CH DE FR GB IT LI LU NL SE

(56) Entgegenhaltungen:
DE–A– 2 442 547
DE–C– 1 934 847
GB–A– 2 024 080
US–A– 4 433 600

(73) Patentinhaber: F.I.M. s.r.l.
Via Stalingrado, 16/3e
I-40128 Bologna (IT)

(72) Erfinder: Bianchi, Roberto
Via Vallescura N. 14
Bologna (IT)

(74) Vertreter: Patentanwäite Dr. Solf & Zapf
Zeppelinstrasse 53
D-8000 München 80 (DE)

## Beschreibung

Die Erfindung betrifft eine Eckenschere zum Ausklinken bzw. Ausschneiden von Ecken aus plattenförmigen Materialien, insbesondere Blechen, mit einem Arbeitstisch mit einer horizontalen Oberfläche mit vorzugsweise zwei aus Ober- und Untermesser bestehenden Messerpaaren, die zueinander verwinkelbar angeordnet sind und eine V-förmige Schneide bilden, und mit mindestens einer automatisch verstellbaren, in einer Führungsnut des Arbeitstisches längsverschiebbar geführten Anschlageinrichtung, mit einem um eine zur Arbeitstischoberfläche senkrechte Drehwelle drehbaren Einstellkopf und einer am Einstellkopf angeordneten Anschlagleiste, wobei der Einstellkopf mit der Drehwelle (23) längs der Führungsnut (21) führbar ist.

Derartige Eckenscheren erleichtern den Ausschnitt von Ecken aus Blechen und dergleichen wesentlich. Eckenausschnitte sind insbesondere erforderlich, um aus Blechen kastenförmige Gegenstände herzustellen. So werden z. B. an allen vier Ecken eines rechteckigen Bleches zumeist quadratische Ecken ausgeschnitten und nachfolgend die vier sich an den Seitenkanten des Bleches ergebenden Laschen umgebogen, wodurch ein Kasten entsteht.

Zum Schnitt werden die Bleche zur Anlage an Anschlagleisten gebracht. Diese Anschlagleisten müssen hierzu exakt positioniert und in der jeweils richtigen Position fixiert werden, was bei aufeinanderfolgenden unterschiedlichen Ausschnitten äußerst zeitaufwendig und arbeitsintensiv ist.

Aus der DE-C 19 34 847, von der vorliegende Erfindung ausgeht, ist eine Eckenschere bekannt, bei der zur Vereinfachung der Positionierung der Anschlagleisten jede der Leisten auf der Arbeitstischoberfläche mittels einer Kolbenzylinderanordnung in einer Führungsnut des Arbeitstisches längsverschiebbar ist. Eine Winkelverstellung der Anschlagleiste wird dadurch ermöglicht, daß die die Leiste verschiebende Kolbenzylinderanordnung über eine Schwenklagerung, deren Achse senkrecht zur Arbeitstischoberfläche angeordnet ist, mit der Anschlagleiste verbunden ist und parallel zu der Kolbenzylinderanordnung eine Anschlagstange angeordnet ist, die ebenfalls mit der Anschlagleiste über eine Schwenklagerung verbunden ist. Auf der Anschlagstange sind in Längsrichtung verstellbare Anschlagringe aufgesetzt, deren Lage die Winkelstellung der Anschlagleiste bestimmt. Durch einmalige Voreinstellung wird durch diese Ausbildung aber lediglich erreicht, daß die Anschlagleiste automatisch zwischen nur zwei Grenzpositionen hin- und herbewegt werden kann. Da jedoch oft aus einem Blech mehr als nur zwei unterschiedliche Ecken ausgeschnitten werden sollen, sind bei dieser bekannten Eckenschere in derartigen Fällen doch wieder zeitaufwendige Einstellarbeiten der Anschlagleisten erforderlich. Außerdem ist die beschriebene Anordnung aufgrund der notwendigen pneumatischen oder hydraulischen Bauteile aufwendig und teuer.

Eine weitere Eckenschere ist aus der DE-PS 27 23 432 bekannt, bei der gegenüber der oben beschriebenen Ausführung die Anschlagstange durch eine weitere Kolbenzylinderanordnung ersetzt ist, was zu dem Vorteil einer größeren Einstellgenauigkeit führen soll. Gegenüber der Ausführung mit nur einer Kolbenzylinderanordnung ist diese Eckenschere jedoch noch aufwendiger und folglich teurer.

Der vorliegenden Erfindung liegt daher die Aufgabe zugrunde, eine Eckenschere der eingangs beschriebenen Art anzugeben, deren Anschlagleisten automatisch mit hoher Genauigkeit in beliebig viele Positionen nacheinander einstellbar sind, und die gegenüber bekannten Eckenscheren einfacher aufgebaut ist. Weiterhin soll die Eckenschere zur aufeinanderfolgenden Ausführung unterschiedlicher Eckenausschnitte vorzugsweise programmierbar sein.

Erfindungsgemäß wird dies durch die im kennzeichnenden Teil des Anspruchs 1 enthaltenen Merkmale erreicht.

Insbesondere, wenn die Antriebe Elektromotoren sind, lassen sich alle Einstellungen über einen Rechner steuern, der einmal programmiert wird und nachfolgend automatisch die richtigen Einstellungen exakt veranlaßt. Daher eignet sich die erfindungsgemäße Eckenschere insbesondere für solche Anwendungsfälle, bei denen eine Reihe von unterschiedlichen Arbeitsgängen periodisch wiederkehrend ausgeführt werden soll. Weitere vorteilhafte Ausgestaltungsmerkmale der Erfindung sind in den Unteransprüchen enthalten.

Anhand eines in der Zeichnung dargestellten Ausführungsbeispieles soll im folgenden die Erfindung näher erläutert werden. Es zeigen :

Fig. 1 eine Vorderansicht einer erfindungsgemäßen Eckenschere,

Fig. 2 eine Draufsicht auf den Arbeitstisch aus Richtung des Pfeils II gemäß Fig. 1,

Fig. 3 einen Schnitt längs der Linie III-III gemäß Fig. 2,

Fig. 4 einen Schnitt längs der Linie IV-IV gemäß Fig. 2,

Fig. 5 eine teilgeschnittene Ansicht aus Richtung des Pfeiles V gemäß Fig. 4,

Fig. 6 einen Teilschnitt längs der Linie VI-VI gemäß Fig. 5,

Fig. 7 einen Schnitt längs der Linie VII-VII gemäß Fig. 5,

Fig. 8 eine perspektivische Explosivdarstellung der Untermesser-Anordnung und

Fig. 9 ein Blockschaltbild der Steuerung einer erfindungsgemäßen Eckenschere.

Eine erfindungsgemäße Eckenschere 1 besteht aus einem Untergestell 2, das insbesondere mechanische und hydraulische Antriebseinrichtungen zur Ausführung des Schnittes, sowie Schalter 3 zur Inbetriebnahme der erfindungsgemäßen Eckenschere 1 enthält, einem auf dem Untergestell 2 angeordneten Arbeitstisch 4 sowie einem Oberteil 5, das an einem Schwenkarm 6 eine Steuereinheit 7 trägt. Die Steuereinheit 7 weist ein Bedienungsfeld 8 sowie ein Display, insbesondere einen Monitor 9, auf.

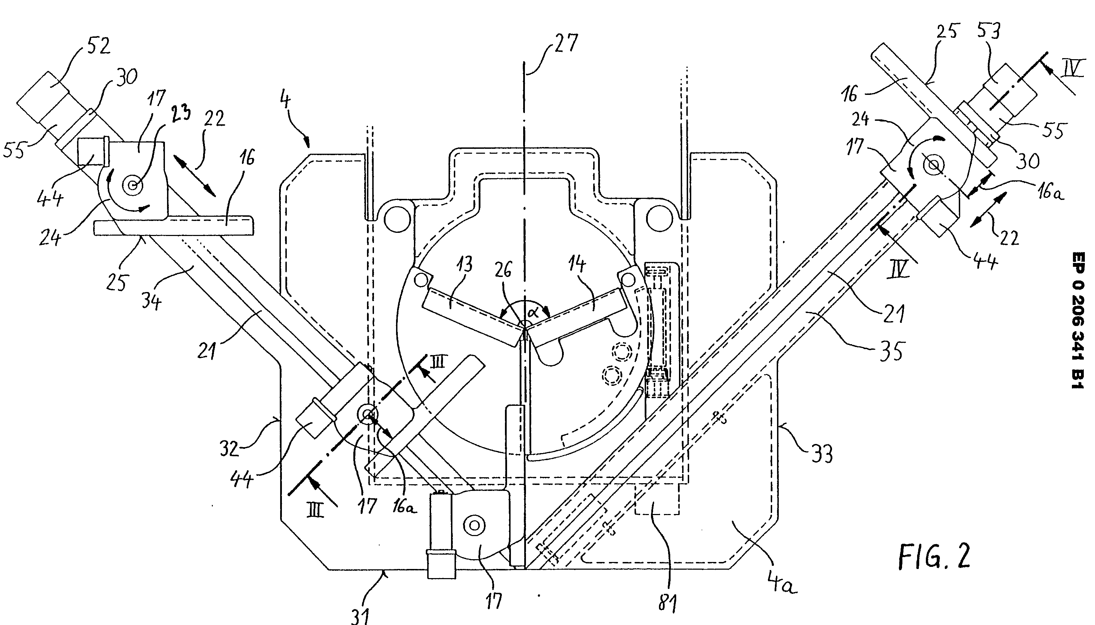

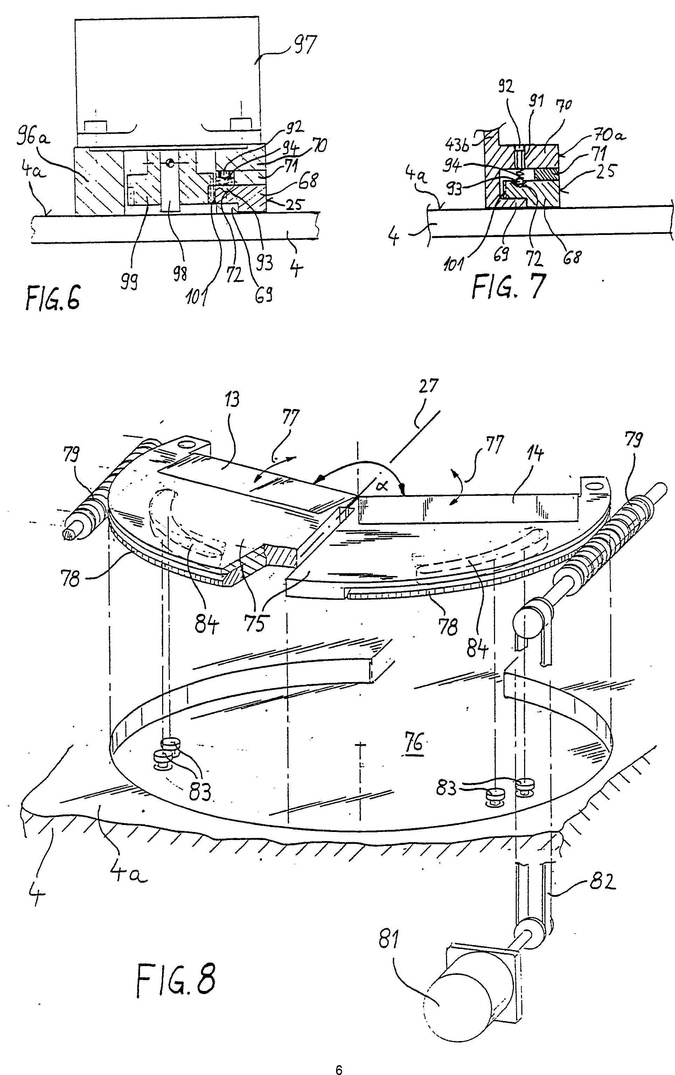

Das Oberteil 5 trägt winklig zueinander angeordnete, zum Schnitt in Richtung des Arbeitstisches 4 bewegbare Obermesser 11, 12, während in dem Arbeitstisch 4 entsprechende Untermesser 13, 14 (Fig. 2 und 8) angeordnet sind, wobei die Messer 11, 12 und 13, 14 scherenartig zusammenwirken.

Zu einer weiter unten noch beschriebenen Verstellung der Winkelanordnung der Messer 11 bzw. 13 zu den Messern 12 bzw. 14 sind die Obermesser 11, 12 mit den Untermessern 13, 14 über geeignete mechanische Verbindungsmittel miteinander in fluchtender Anordnung verbunden, so daß sich jedes Messerpaar 11, 13 und 12, 14 nur gemeinsam bewegen läßt.

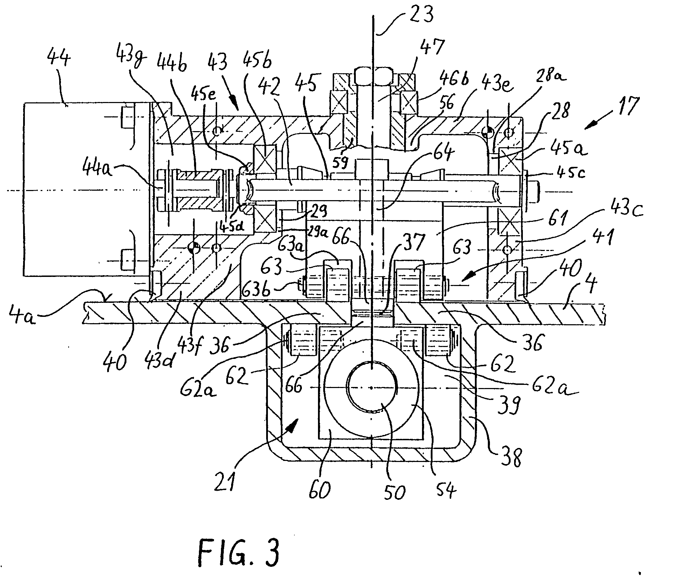

Der Arbeitstisch 4 trägt auf seiner ebenen, horizontalen Oberfläche 4a zwei Anschlagleisten 16, die erfindungsgemäß an jeweils einem Einstellkopf 17 befestigt sind. Jeder Einstellkopf 17 ist sowohl in einer geradlinigen Führungsnut 21 des Arbeitstisches 4 längsverschiebbar (siehe die Doppelpfeile 22 in Fig. 2) als auch um eine zur Ebene der Arbeitstisch-Oberfläche 4a senkrechte Achse 23 (Fig. 3) drehbar gelagert (siehe die Doppelpfeile 24). Zur Verdeutlichung dieser Bewegungen sind auf der linken Seite der Fig. 2 drei Einstellköpfe 17 in verschiedenen Positionen dargestellt, obwohl natürlich in jeder Führungsnut 21 tatsächlich nur ein Einstellkopf 17 vorhanden ist. Die Anschlagleiste 16 ist im seitlichen Abstand 16a von der Achse 23 am Einstellkopf 17 angeordnet und erstreckt sich rechtwinklig zum senkrechten Abstand 16a bzw. in tangentialer Anordnung zu einem durch die Drehung des Einstellkopfes 17 bestimmten Kreisbogen. Sie ist außerdem parallel zur und unmittelbar auf der Arbeitstisch-Oberfläche 4a an dem Einstellkopf 17 befestigt, so daß sich ebene Anschlagflächen 25 zur Anlage der Kanten eines nicht dargestellten, auf den Arbeitstisch 4 aufgelegten Bleches ergeben.

Die Führungsnuten 21 schließen zwischen sich einen Winkel von vorzugsweise 90° ein und sind bezüglich der in der Ebene der Arbeitstisch-Oberfläche 4a und durch die Spitze 26 der V-förmigen Messerschneide verlaufenden Mittellinie 27 des Arbeitstisches 4 symmetrisch sowie in Richtung der Vorderkante 31 des Arbeitstisches 4 konvergierend angeordnet. Durch diese vorteilhafte Anordnung ist in Verbindung mit der Lageverstellbarkeit der Anschlagleisten 16 praktisch jedes auszuschneidende Blech in zum Schnitt genau richtiger Position auszurichten. Dabei muß das Blech nicht unbedingt rechtwinklige Kanten aufweisen.

Es ist für besonders große zu bearbeitende Bleche vorteilhaft, wenn der Arbeitstisch 4 an seinen Seitenkanten 32, 33 Stege 34, 35 aufweist, in bzw. an denen sich die Führungsnuten 21 fortsetzen.

Jede Führungsnut 21 erstreckt sich, wie aus dem Querschnitt in Fig. 3 zu erkennen ist, ausgehend von der Arbeitstisch-Oberfläche 4a senkrecht in den Arbeitstisch 4 hinein und erweitert sich beidseitig unterhalb der Oberfläche 4a zu einem Führungskanal 39 mit vorzugsweise rechteckigem Querschnitt. Der Führungskanal 39 ist hierdurch in Richtung der Arbeitstisch-Oberfläche 4a von zwei einander gegenüberliegenden Führungsstegen 36 begrenzt, deren Oberseite in der Ebene der Arbeitstisch-Oberfläche 4a liegt. Zwischen sich bilden die Führungsstege 36 einen Führungsschlitz 37, dessen Funktion weiter unten noch erläutert wird. Im dargestellten Ausführungsbeispiel handelt es sich bei dem Arbeitstisch 4 um eine relativ dünne Platte, weshalb sich an deren der Oberfläche 4a gegenüberliegenden Unterseite ein den Führungskanal 39 umschliessendes U-Profil 38 mit seinen Schenkeln einstückig anschließt. Neben dieser vorteilhaften Ausbildung kann jedoch auch die Führungsnut 21 mit dem beschriebenen, aus Führungsschlitz 37 und Führungskanal 39 bestehenden Querschnitt aus einer Platte ausgearbeitet, insbesondere ausgefräst, sein, deren Dicke größer als die Tiefe der Führungsnut 21 ist.

Jeder Einstellkopf 17 weist einen in der Führungsnut 21 geführten Schlitten 41 auf, der oberhalb des Arbeitstisches 4 ein Schneckenrad 42 trägt. Dieses Schneckenrad 42 ist starr mit dem Schlitten 41 verbunden, beispielsweise verschraubt, wobei seine Achse mit der Drehachse 23 des Einstellkopfes 17 zusammenfällt, also ebenfalls senkrecht zur Arbeitstisch-Oberfläche 4a angeordnet ist. Folglich liegt das Schneckenrad 42 in einer zur Arbeitstisch-Oberfläche 4a parallelen Ebene. Der Schlitten 41 sowie das Schneckenrad 42 werden oberhalb der Arbeitstisch-Oberfläche 4a von einem Gehäuse 43 glockenartig umgeben, das in einer Draufsicht im wesentlichen rechteckig oder quadratisch mit zur Arbeitstisch-Oberfläche 4a senkrechten Seitenwandungen 43a, 43b, 43c und 43d und einer zur Arbeitstisch-Oberfläche 4a parallelen oberen Wandung 43e ausgebildet ist (siehe Fig. 3, 4 und 5). Der untere Rand des Gehäuses 43, d. h. der Seitenwandungen 43a bis d, liegt unmittelbar, vorzugsweise jedoch über lippenartige Dichtelemente 40, auf der Arbeitstisch-Oberfläche 4a auf. Die Dichtelemente 40 können aus Metall oder einem geeigneten gummielastischen Material bestehen. Bei Verwendung von Dichtelementen 40 bilden diese senkrechte Verlängerungen der in diesem Fall von der Arbeitstisch-Oberfläche 4a geringfügig beabstandeten unteren Ränder der Seitenwände 43a bis d.

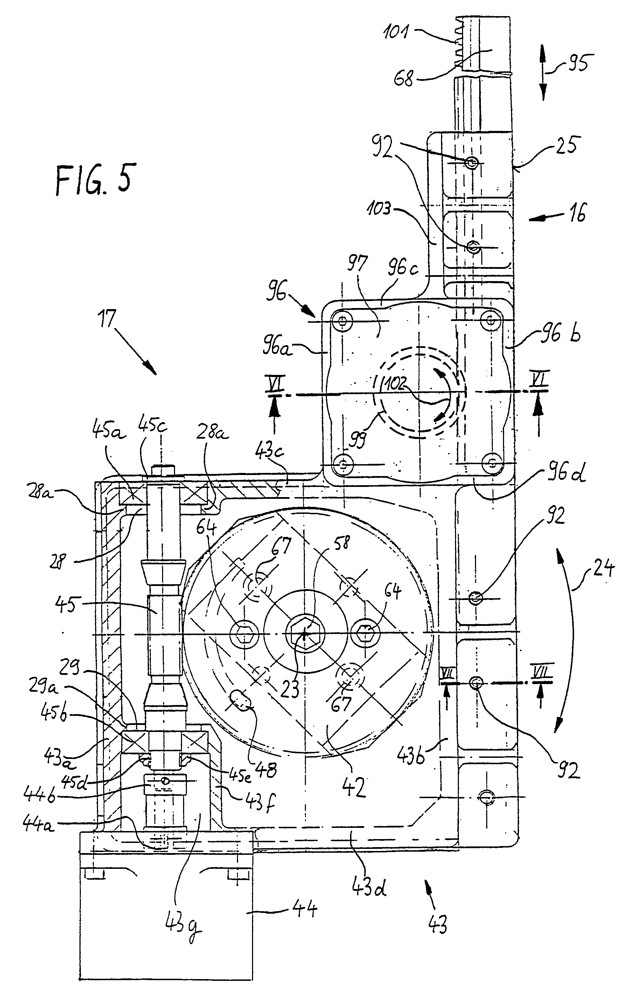

An dem Gehäuse 43 ist seitlich, und zwar an der Seitenwandung 43d, ein motorischer Antrieb 44 angeflanscht, dessen Antriebswelle 44a die Seitenwandung 43d durchgreift und über eine Kupplung 44b mit einer Schneckenantriebswelle 45 axial verbunden ist. Die Schneckenantriebswelle 45 ist parallel zur Arbeitstisch-Oberfläche 4a sowie parallel zur Gehäuseseitenwandung 43a angeordnet und steht tangential mit dem Schneckenrad 42 in Eingriff. Hierzu ist die Schneckenantriebswelle 45 auf der Höhe des Schneckenrades 42 im Gehäuse 43 über Wälz- oder Gleitlager 45a, 45b drehbar gelagert. Das Lager 45a ist in dem an die Seitenwandung 43a angrenzenden Bereich der Seitenwandung 43c angeordnet, und zwar weist die Seitenwandung 43c an dieser Stelle einen Bereich mit größerer Wandstärke auf, in dem eine Bohrung 28 zur Aufnahme des Lagers 45a ausgebildet ist. In dem Eckbereich zwischen den Seitenwandungen 43a und 43d weist das Gehäuse 43 innenseitig eine von Wandungen 43f gebildete Kammer 43g vorzugsweise mit einem runden Querschnitt auf, in die die Antriebswelle 44a des motorischen Antriebs 44 durch die Seitenwandung 43d hineinragt und innerhalb der die Kupplung 44b angeordnet ist. Auf der der Seitenwandung 43d gegenüberliegenden Seite der Kammer 43g geht diese in eine in der Wandung 43f ausgebildete Bohrung 29 mit vermindertem Durchmesser über, die zur Aufnahme des Lagers 45b in zum Lager 45a fluchtender Anordnung dient. Die Kammer 43g ist von der Seite der Seitenwandung 43d her zum Einführen des Lagers 45b zugänglich (ohne motorischen Antrieb 44). Wie insbesondere aus Fig. 3 und 5 zu erkennen ist, weisen die zur Aufnahme der Lager 45a, b vorgesehenen Bohrungen 28, 29 an ihren einander zugekehrten Randbereichen umlaufende, radial nach innen weisende Ringstege 28a, 29a auf. Die Schneckenantriebswelle 45 trägt an ihrem, dem motorischen Antrieb 44 gegenüberliegenden, das Lager 45a nach außen durchragenden Ende einen Ringansatz 45c, z. B. einen in einer Ringnut sitzenden Sprengring, und an ihrem der Kupplung 44b zugewandten, das Lager 45b in Richtung des motorischen Antriebs 44 durchragenden Ende ein Gewinde 45d mit einer Mutter 45e. Die Lager 45a, b werden somit aufgrund des Ringansatzes 45c und der Mutter 45e axial gegeneinander sowie gegen die Ringstege 28a, 29a der Bohrungen 28, 29 gepreßt.

Entgegen dieser Ausbildung, bzw. zusätzlich hierzu, können die Lager 45a, b auch in die Bohrungen 28, 29 eingeschrumpft oder mit anderen gleichwirkenden Mitteln drehfest montiert sein.

Durch die beschriebene Ausbildung erfolgt durch Rotation der Schneckenantriebswelle 45 eine Drehung des Gehäuses 43 zusammen mit der daran befestigten Anschlagleiste 16 um das feststehende Schneckenrad 42, d. h. um die Achse 23.

Die Anschlagleiste 16 ist an dem Gehäuse 43 des Einstellkopfes 17 in der oben beschriebenen Anordnung zur Arbeitstisch-Oberfläche 4a sowie zweckmäßigerweise parallel zur Schneckenantriebswelle 45 und auf der anderen Seite der Achse 23 an der Gehäuseseitenwandung 43b befestigt.

Zur spiel- und kippfreien Drehlagerung des Gehäuses 43 dient eine Achse 47, die in senkrechter Anordnung zur Arbeitstisch-Oberfläche 4a starr mit dem Schlitten 41 verbunden, vorzugsweise verschraubt, ist, wobei sie eine zentrische Bohrung des Schneckenrades 42 durchgreift. Die Achse 47 trägt auf ihrem freien, sich über den Schlitten 41 erstreckenden Ende vorzugsweise zwei voneinander axial beabstandete Wälzlager 46a, b, deren Lageraußenringe drehfest mit dem Gehäuse 43 verbunden sind. Das Gehäuse 43 weist in seiner oberen Wandung 43e eine Bohrung mit einem axialen Ringsteg 56 auf. Das freie Ende der Achse 47 trägt unmittelbar auf dem Schneckenrad 42 liegend das Lager 46a, darauf den Ringsteg 56 des Gehäuses 43, das zweite Lager 46b sowie einen Druckring 57. Mittels einer Mutter 58 werden die Lager 46 sowie der Ringsteg 56 über den Druckring 57 axial gegeneinander gezogen. Ein Distanzring 59 hält dabei auch die Lagerinnenringe auf Abstand. Entgegen dieser beschriebenen Ausbildung liegt es im Rahmen der Erfindung, die Drehlagerung des Gehäuses 43 über Gleitlager vorzusehen.

Die Erfindung sieht für den motorischen Antrieb 44 eine Begrenzung der Drehbewegung der Einstellköpfe 17 vor. Hierzu sind (gemäß Fig. 5) Anschlagnocken 48 auf der oberen Fläche des Schneckenrades 42 angeordnet, die mit auf der Gehäuseinnenseite vorgesehenen Schaltern (nicht dargestellt) zusammenwirken. Jedoch ist die Erfindung nicht auf diese Ausbildung beschränkt, sondern umfaßt auch alle in diesem Sinne gleichwirkenden Mittel zur Begrenzung der Drehbewegung der Einstellköpfe 17, wie beispielsweise eine elektronische Schaltung zur direkten Begrenzung der Drehbewegung des motorischen Antriebes 44 in Abhängigkeit von der beispielsweise durch Sensoren abzutastenden Drehstellung des Einstellkopfes 17.

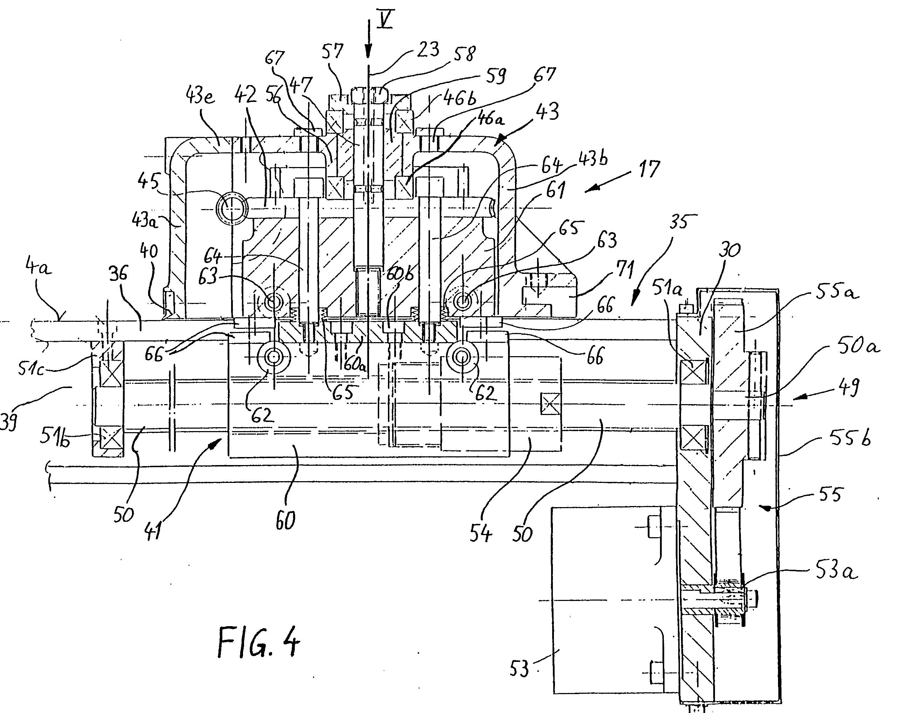

Für jeden Einstellkopf 17 ist zu seiner Längsverschiebung ein Spindeltrieb 49 vorgesehen. In dem Führungskanal 39 jeder Führungsnut 21 ist hierzu eine Gewindespindel 50 drehbar gelagert, wozu gemäß Fig. 4 Wälz- und/oder Gleitlager 51 vorgesehen sind. Das Lager 51a ist im Endbereich des jeweiligen seitlichen Arbeitstisch-Ansatzes 34, 35, vorzugsweise in einem den Führungskanal 39 stirnseitig verschließenden Deckel 30, und das Lager 51b fluchtend mit dem Lager 51a an dem anderen Ende des Führungskanals 39 angeordnet, wozu ein von der Unterseite der Führungsstege 36 senkrecht in den Führungskanal 39 ragender Lagerblock 51c vorgesehen ist. Die Gewindespindel 50 ist einendig im Lager 51b gelagert und weist anderendig eine über das Lager 51a hinaus- und den Deckel 30 durchragende axiale Verlängerung 50a auf, die kraftschlüssig mit einem Rotationsantrieb verbunden ist. Im dargestellten Beispiel ist auf die Verlängerung 50a ein Zahnrad 55a eines Getriebes 55 montiert, das — ggf. über weitere Zahnräder — mit einem Antriebsritzel 53a eines motorischen Antriebes 53 kraftschlüssig verbunden ist. Das Getriebe 55 kann als Über- oder Untersetzungsgetriebe ausgebildet sein. Der motorische Antrieb 53 ist an eine von dem Führungskanal 39 nach unten ragende Verlängerung des Deckels 30 auf der Seite des Führungskanals 39 angeflanscht, wobei die Motorwelle die Deckelverlängerung durchragt. Die Getriebezahnräder sind durch einen Deckel 55b abgedeckt. Anstelle des aus Zahnrädern bestehenden Getriebes 55 kann im Rahmen der Erfindung auch beispielsweise ein Riemen oder Zahnriemenantrieb vorgesehen sein, oder der motorische Antrieb 53 kann unmittelbar mit der Gewindespindel 50 verbunden sein.

An dem Schlitten 41 des Einstellkopfes 17, und zwar an dessen in dem Führungskanal 39 angeordneten, vorzugsweise aus einem quaderförmigen Block bestehenden Unterteil 60, ist eine Gewindehülse 54 starr befestigt, die die Gewindespindel 50 umschließt. Bei Drehung der Gewindespindel 50 erfolgt so eine Längsverschiebung der Gewindehülse 54 zusammen mit dem Schlitten 41 und folglich auch dem Einstellkopf 17.

Das Unterteil 60 des Schlittens 41 ist mit einem oberhalb des Arbeitstisches 4 angeordneten, vorzugsweise ebenfalls aus einem im wesentlichen quaderförmigen Block bestehenden Oberteil 61 verbunden. Das Unterteil 60 weist an seiner in Richtung der Arbeitstisch-Oberfläche 4a angeordneten Oberseite Laufrollen 62 auf, die auf der Unterseite der Führungsstege 36 aufliegen und so bei der Längsbewegung des Schlittens 41 abrollen können. Das Schlittenoberteil 61 weist an seiner Unterseite Laufrollen 63 auf, die auf der Oberseite der Führungsstege 36, d. h. auf der Arbeitstisch-Oberfläche 4a, aufliegen und abrollen können.

Die Laufrollen 62 des Unterteils 60 sind an Achsen 62a gelagert, die von den Seitenflächen des quaderförmigen Unterteils 60 in senkrechter Anordnung zur Längserstreckung des Führungskanals 39 und in einer zur Ebene der Arbeitstisch-Oberfläche 4a parallelen Ebene liegend abstehen. In Verschieberichtung des Schlittens 41 gesehen weisen die an die obere Vorder- und Hinterkante des Unterteils 60 angrenzenden Bereiche der Seitenflächen jeweils zwei Laufrollen 62 auf.

Die Lagerung der Laufrollen 63 des Oberteils 61 kann auf die gleiche Art ausgebildet sein, jedoch sind im dargestellten Beispiel in den an die Vorder- und Hinterkante des Oberteils 61 angrenzenden Bereichen der Unterseite jeweils zwei sich senkrecht nach oben in den quaderförmigen Block erstreckende Vertiefungen oder Nuten 63a vorgesehen, so daß sich in der Ansicht nach Fig. 3 etwa E-förmige Querschnitte ergeben. In jeder Vertiefung 63a ist eine Laufrolle 63 angeordnet, die mit ihrem Umfang die Unterseite des Oberteils 61 überragt. Zur Drehlagerung der Laufrollen 63 dienen Achsen 63b, die senkrecht zum Führungsschlitz 37 sowie in einer zur Ebene der Arbeitstisch-Oberfläche 4a parallelen Ebene angeordnet sind. Auch das Oberteil 61 liegt vorzugsweise mit vier Laufrollen 63 auf den Führungsstegen 36 auf.

Die Laufrollen 62 des Unterteils 60 sind gegenüber den Laufrollen 63 des Oberteils 61 quer zur Führungsnut 21 versetzt angeordnet, d. h. die Laufrollen 62 des vorderen und hinteren Rollenpaares des Unterteils 60 sind in zur Führungsnut 21 senkrechter Richtung weiter voneinander beabstandet als die Laufrollen 63 der Rollenpaare des Oberteils 61.

Das Oberteil 61 ist mit dem Unterteil 60 mittels den Führungsschlitz 37 durchragender Schrauben 64 verbunden. Dabei sind zwischen der Oberseite des Unterteils 60 bzw. eines in den Führungsschlitz 37 ragenden quaderförmigen Ansatzes 60a, der mittels Schrauben 60b mit dem Unterteil 60 verbunden ist, und der Unterseite des Oberteils 61 Federn, insbesondere Spiral-Druckfedern 65, angeordnet, die dazu dienen, daß die Laufrollen 62, 63 stets mit einer konstanten Vorspannung auf den Führungsstegen 36 aufliegen. Vorzugsweise durchgreifen die Schrauben 64 Durchgangsbohrungen des Oberteils 61 und greifen in Gewinde des Unterteils 60 bzw. Ansatzes 60a ein. Dabei weisen die Durchgangsbohrungen auf der Unterseite des Oberteils 61 Ansenkungen auf, in denen die Spiral-Druckfedern 65 die Schrauben 64 umgreifend angeordnet sind. Die obere Wandung 43e des Gehäuses 43 weist zwei mit den Schrauben 64 in einer bestimmten Drehstellung des Gehäuses 43 fluchtende und durch Stopfen 67 verschließbare Bohrungen auf, durch die die Schrauben 64 auch nach vollständiger Montage des Einstellkopfes 17 zur Einstellung der Vorspannung zwischen dem Unterteil 60 und dem Oberteil 61 noch zugänglich sind. Die Schrauben 64 sind vorzugsweise als Inbusschrauben ausgebildet.

In Verschieberichtung des Schlittens 41 gesehen weisen die an die Vorder- und Hinterkanten angrenzenden Bereiche der Ober- bzw. Unterseite des Unterteils 60 und des Oberteils 61 Führungsansätze 66 auf, die einander gegenüberliegend in den Führungsschlitz 37 hineinragen. Dabei entspricht die Breite der Führungsansätze 66 exakt der Breite des Führungsschlitzes 37, d. h. dem lichten Abstand der Kanten der Führungsstege 36. Bei der Längsverschiebung des Schlittens 41 sorgen so die durch den Führungsschlitz 37 gleitenden Führungsansätze 66 in Verbindung mit den Laufrollen 62, 63 für eine exakte, kippspielfreie, aber dennoch leichtgängige Führung des Einstellkopfes 17 in der Führungsnut 21.

Die Längsverschiebung des Einstellkopfes 17 kann durch Endanschläge begrenzt werden. An beiden Enden der Führungsnuten 21 können hierzu beispielsweise Endschalter (nicht dargestellt) vorgesehen sein, die zur Steuerung der motorischen Antriebe 52, 53, d. h. zu deren Abschalten in der jeweiligen Endstellung des Einstellkopfes 17, dienen.

Für besonders große auszuschneidende Bleche ist es neben der beschriebenen seitlichen Verlängerung der Führungsnuten 21 durch die Stege 34, 35 weiterhin vorteilhaft, wenn die an den Einstellköpfen 17 befestigten Anschlagleisten 16 in ihrer Länge verstellbar sind. Die diese Verstellbarkeit gewährleistende Ausbildung des Einstellkopfes 17 soll im folgenden unter Bezug auf die Fig. 5, 6 und 7 erläutert werden.

Die Anschlagleiste 16 wird von einer Verschiebeleiste 68 mit L-förmigem Querschnitt gebildet, die parallel zur Gehäusewandung 43b längsverschiebbar geführt ist. Hierzu weist die Gehäusewandung 43b einen sich unmittelbar über der Arbeitstisch-Oberfläche 4a parallel nach außen erstreckenden Steg 69 mit rechteckigem Querschnitt auf, so daß der untere Bereich der Gehäusewandung 43b ebenfalls einen L-förmigen Querschnitt aufweist. Die Verschiebeleiste 68 ist derart um 180° um ihre Längsachse gedreht, daß ihr waagerechter L-Schenkel parallel zu dem Steg 69 auf diesem aufliegt und der Steg 69 in dem Innenwinkel des L-förmigen Querschnittes der Verschiebeleiste 68 aufgenommen wird. Die freie Länge des senkrechten L-Schenkels der Verschiebeleiste 68 entspricht dabei der Höhe des Steges 69. Die der Gehäusewandung 43b entgegengesetzte Fläche des senkrechten L-Schenkels der Verschiebeleiste 68 bildet die Anschlagfläche 25 für ein zu positionierendes Blech. Die Gehäusewandung 43b weist einen in zur Arbeitstisch-Oberfläche 4a senkrechter Richtung von dem Steg 69 beabstandeten und parallel zu diesem angeordneten zweiten Steg 70 auf, der den ersten Steg 69 in zur Gehäusewandung 43b senkrechter Richtung überragt, dessen senkrechte Außenfläche 70a jedoch mit der Anschlagfläche 25 in zur Arbeitstisch-Oberfläche 4a senkrechter Richtung fluchtet. Zwischen dem Steg 70 und der Verschiebeleiste 68 ist eine Führungsleiste 71 angeordnet, die vorzugsweise mit dem Steg 70 verbunden, z. B. verschraubt, ist. Die Verschiebeleiste 68 weist auf der der Arbeitstisch-Oberfläche 4a entgegengesetzten Oberseite ihres waagerechten L-Schenkels eine Längskeilnut 72 auf, oberhalb der in dem zweiten Steg 70 eine Reihe von senkrechten, voneinander beabstandeten Gewindebohrungen 91 angeordnet sind. In diese Gewindebohrungen 91 greifen Schrauben 92 ein. Unterhalb jeder Schraube 92 ist in der Längskeilnut 72 eine Führungskugel 93 angeordnet, wobei zwischen dem Ende der Schraube 92 und der Kugel 93 eine Spiralfeder 94 angeordnet ist, deren Vorspannung folglich mittels der Schraube 92 einstellbar ist. Die Längskeilnut 72 ist im Bereich des freien Endes des waagerechten L-Schenkels der Verschiebeleiste 68 angeordnet, so daß dieser Schenkel durch eine von der Schraube 92 über die Feder 94 auf die Kugel 93 übertragene Kraft gegen den waagerechten Steg 69 der Gehäusewandung 43b gepreßt und so die Verschiebeleiste 68 für eine Verschiebung in ihrer Längsrichtung gemäß Doppelpfeil 95 geführt wird.

An der Außenseite der Gehäusewandung 43c schließt sich ein weiteres Gehäuse 96 an, das in Draufsicht (Fig. 5) rechteckig oder quadratisch mit den Wandungen 96a, b, c und d ausgebildet ist, wobei die Wandung 96d etwa mit der Wandung 43c des Gehäuses 43 fluchtet. Das Gehäuse 96 trägt auf seiner der Arbeitstisch-Oberfläche 4a gegenüberliegenden Oberseite einen motorischen Antrieb 97, dessen Welle 98 senkrecht zur Arbeitstisch-Oberfläche 4a angeordnet ist und ein Zahnritzel 99 trägt. Die Verzahnung dieses Zahnritzels 99 greift in eine zahnstangenartige Verzahnung 101 der Verschiebeleiste 68 ein, die auf der der Anschlagfläche 25 gegenüberliegenden Längsseite des waagerechten L-Schenkels ausgebildet ist. Eine Drehung des Zahnritzels 99 mittels des motorischen Antriebs 97 (Doppelpfeil 102) hat somit eine Längsverschiebung der Verschiebeleiste 68 (Doppelpfeil 95) zur Folge.

Auf der der Wandung 96d gegenüberliegenden Außenseite der Wandung 96c schließt sich eine mit der Gehäusewandung 43b fluchtende Wandung 103 an, die analog zur Ausbildung der Wandung 43b ebenfalls zwei Stege 69 und 70 aufweist, zwischen denen die Verschiebeleiste 68 mittels der in die Längskeilnut 72 eingreifenden und unter durch die Schrauben 92 bedingter Vorspannung der Spiralfedern 94 stehender Führungskugeln 93 geführt ist.

Dabei setzen sich die Stege 69 und 70 aber auch im Bereich des Gehäuses 96 fort (Fig. 6).

Vorzugsweise sind zur exakten Längsführung der Verschiebeleiste 68 in deren Längserstreckung beidseitig des Gehäuses 96 jeweils zwei Führungsschrauben 92 mit entsprechenden Spiralfedern 94 und Führungskugeln 93 vorgesehen. Diese Ausbildung gewährleistet sowohl eine exakte Führung als aber auch eine einfache und schnelle Auswechselbarkeit der Verschiebeleiste 68, da lediglich die Führungsschrauben 92 gelöst werden müssen, um die Leiste 68 senkrecht zur Wandung 43b bzw. 103 entnehmen bzw. einsetzen zu können.

Erfindungsgemäß ist auch der Schneidenwinkel zwischen den Messerpaaren 11, 13 und 12, 14 verstellbar. Diese Verstellung soll im folgenden unter Bezug auf Fig. 8 anhand der Untermesser 13, 14 erläutert werden.

Die Untermesser 13, 14 sind an jeweils einem flachen, kreissegmentförmigen Messerhalter 75 in hierzu radialer Anordnung befestigt. Die Messerhalter 75 sind erfindungsgemäß in der Ebene des Arbeitstisches 4 in einer kreisförmigen Tischausnehmung 76 derart gelagert und zueinander angeordnet, daß sie zueinander bezüglich der Mittellinie 27 des Arbeitstisches 4 spiegelsymmetrisch sind und zur Einstellung des Schneidenwinkels $\alpha$ zwischen den Untermessern 13, 14 auf einer Kreisbahn gegeneinander verschiebbar sind, was die Pfeile 77 verdeutlichen sollen. Zur Bewegung der Messerhalter 75 weisen sie an ihrer Peripherie Schneckenrad-Verzahnungen 78 auf, die mit jeweils einer tangential angeordneten Schneckenantriebswelle 79 in Eingriff stehen. Um die Schneckenantriebswellen 79 zur Drehverschiebung der Messerhalter 75 in Rotation versetzen zu können, sind sie mit jeweils einem motorischen Antrieb 81 vorzugsweise über Antriebsriemen 82 verbunden. In der Tischausnehmung 76 sind Führungsansätze 83 vorgesehen, die in kreisbogenförmige Führungsausnehmungen 84 der Messerhalter 75 eingreifen. Aus Stabilitätsgründen sind im dargestellten Ausführungsbeispiel diese Führungsausnehmungen 84 nur auf der Unterseite der Messerhalter 75 ausgebildet. Durch diese vorteilhafte Ausbildung werden die Untermesser 13, 14 winkelverstellbar und spielfrei geführt.

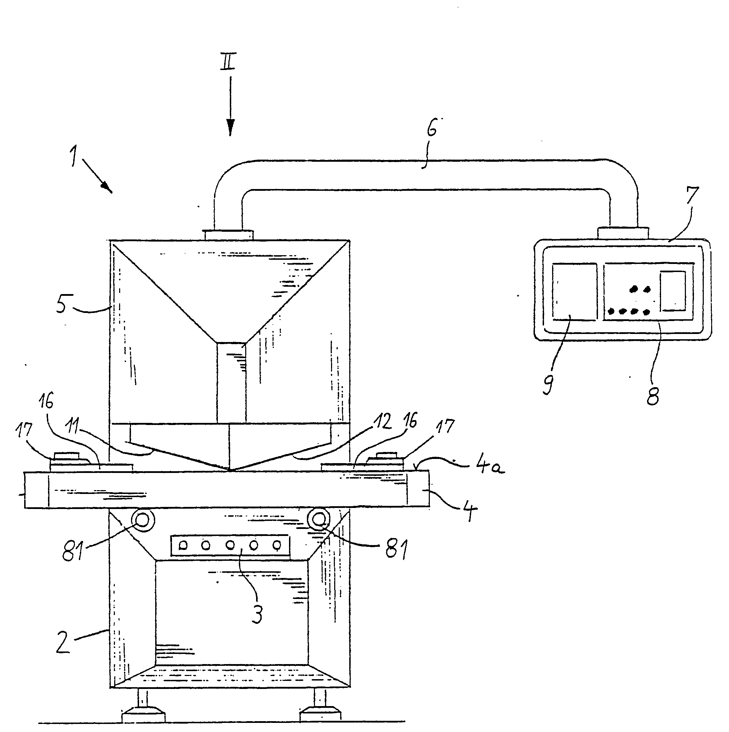

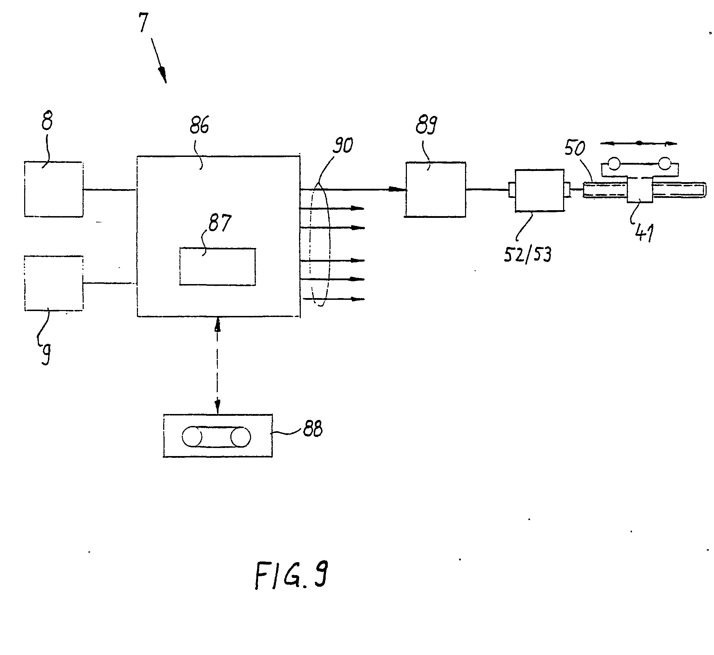

Erfindungsgemäß sind vorzugsweise alle motorischen Antriebe 44, 52, 53, 97, 81 Elektromotoren und insbesondere numerisch steuerbare Schrittmotoren. Diese Motoren sind vorteilhafterweise über Verbindungskabel fest mit der Steuereinheit 7 verbunden, bei der es sich um eine programmierbare numerische Steuerung handelt (siehe Fig. 1 und 9). Somit können die zum Ausschneiden unterschiedlicher Winkel aus einem Blech erforderlichen Arbeitsabläufe, d. h. alle notwendigen Einstellarbeiten der Anschläge sowie des Schneidenwinkels, automatisiert bzw. programmiert werden.

In Fig. 9 ist ein Blockschaltbild der Steuereinheit 7 beispielhaft für eine der gesteuerten Achsen, nämlich die Linearverschiebungsachse eines der beiden Einstellköpfe 17, dargestellt. Ein Rechner 86 mit einem Speicher 87, dem Bedienungsfeld 8, dem Monitor 9 sowie ggf. einer zusätzlichen Speichereinheit 88 ist über eine Motorsteuerung 89 mit dem Motor 52/53 verbunden, durch dessen Rotation auch die Gewindespindel 50 rotiert und somit die Verschiebebewegung des Schlittens 41 veranlaßt wird. Für jeden vorhandenen Motor 44, 52, 53, 97, 81 ist ein gesonderter Steuerkanal 90 vorgesehen.

Die verwendeten numerisch steuerbaren Schrittmotoren weisen weder Bürsten noch Getriebe auf, was sich positiv auf ihre Haltbarkeit auswirkt. Sie gewährleisten einen Antrieb in beide Drehrichtungen um jeweils bestimmte Winkelschritte (z. B. 1,8°) unter der Einwirkung kurzer Stromimpulse. Sie werden vorzugsweise mit gepulster Spannung einer Frequenz von etwa 1 000 Hz bis 1 500 Hz beaufschlagt, wodurch sie eine nahezu homogene Rotationsbewegung erzeugen. Dabei ist es vorteilhaft, wenn zur Positionierung der Einstellköpfe 17 und/oder zur Einstellung des Schneidenwinkels die Motoren zunächst mit einer Spannung hoher Frequenz beaufschlagt werden, da dieses zu einer Beschleunigung der Einstellung führt. Zur Feineinstellung wird nachfolgend jedoch die Frequenz stetig oder stufig reduziert, wodurch eine fehlerlose Positionierung erreicht wird.

## Patentansprüche

1. Eckenschere (1) zum Ausklinken bzw. Ausschneiden von Ecken aus plattenförmigen Materialien, insbesondere Blechen, mit einem Arbeitstisch (4) mit einer horizontalen Oberfläche mit vorzugsweise zwei aus Ober- (11, 12) und Untermesser (13, 14) bestehenden Messerpaaren, die zueinander verwinkelbar angeordnet sind und eine V-förmige Schneide bilden, und mit mindestens einer automatisch verstellbaren, in einer Führungsnut (21) des Arbeitstisches (4) längsverschiebbar geführten Anschlageinrichtung, mit einem um eine zur Arbeitstischoberfläche senkrechte Drehwelle (23) drehbaren Einstellkopf (17) und einer am Einstellkopf (17) angeordneten Anschlagleiste (16), wobei der Einstellkopf (17) mit der Drehwelle (23) längs der Führungsnut (21) führbar ist,
dadurch gekennzeichnet,

(a) daß am Einstellkopf (17) ein Drehantriebs-

Motor (44) angeordnet ist, der sich für die Drehung des Einstellkopfes (17) und der Anschlagleiste (16) über Getriebemittel (42, 45) an einem Schlitten (41) abstützt,

(b) daß die Getriebemittel aus einem konzentrisch zur Drehwelle (23) am Schlitten (41) fest angeordneten Schneckenrad (42) und einer horizontal in einem Gehäuse (43) des Einstellkopfes gelagerten, mit dem Motor verbundenen Schneckenwelle (45) bestehen, wobei die Schneckenwelle (45) tangential am Schneckenrad (42) angreift,

(c) daß der Schlitten (41) über einen motorischen Antrieb (52 bzw. 53) in der Führungsnut (21) längsverschiebbar gelagert ist,

(d) daß zur Längsverschiebung der Einstellköpfe (17) jeweils ein Spindeltrieb (49) vorgesehen ist, und

(e) daß in einem Führungskanal (39) jeder Führungsnut (21) eine Gewindespindel (50) drehbar gelagert ist, die mit einem am Ende eines Steges (34, 35) des Arbeitstisches (4) angeordneten motorischen Antrieb (52, 53) kraftschlüssig verbunden ist, und daß die Gewindespindel (50) mit einer mit dem Schlitten (41) starr verbundenen Gewindehülse (54) in Eingriff steht.

2. Eckenschere nach Anspruch 1, dadurch gekennzeichnet, daß der Einstellkopf (17) haubenförmig ausgebildet ist und der Motor (44) sowie die Anschlagleiste (16) im radialen Abstand von der Drehwelle (23) des Einstellkopfes (17) angeordnet sind.

3. Eckenschere nach Anspruch 1 oder 2, dadurch gekennzeichnet, daß die in der Arbeitstisch-Oberfläche (4a) zur Längsverschiebung jeweils eines Einstellkopfes (17) vorgesehenen zwei geradlinigen Führungsnuten (21) zwischen sich einen Winkel von vorzugsweise 90° einschließen und bezüglich der in der Ebene der Arbeitstisch-Oberfläche (4a) und durch die Spitze (26) der V-förmigen Schneide verlaufenden Mittellinie (27) des Arbeitstisches (4) symmetrisch sowie in Richtung der Vorderkante (31) des Arbeitstisches (4) konvergierend angeordnet sind.

4. Eckenschere nach einem oder mehreren der Ansprüche 1 bis 3, dadurch gekennzeichnet, daß der Arbeitstisch (4) an seinen Seitenkanten (32, 33) Ansatzstege (34, 35) zur Verlängerung der Führungsnuten (21) aufweist.

5. Eckenschere nach einem oder mehreren der Ansprüche 1 bis 4, dadurch gekennzeichnet, daß sich jede Führungsnut (21) im Querschnitt gesehen ausgehend von der Arbeitstisch-Oberfläche (4a) senkrecht in den Arbeitstisch (4) hineinerstreckt und sich unterhalb der Arbeitstisch-Oberfläche (4a) derart beidseitig zu einem Führungskanal (39) vorzugsweise rechteckigen Querschnitts erweitert, daß der Führungskanal (39) in Richtung der Arbeitstisch-Oberfläche (4a) von zwei einander in der Ebene des Arbeitstisches (4) gegenüberliegenden Führungsstegen (36) begrenzt ist, die zwischen sich einen Führungsschlitz (37) bilden.

6. Eckenschere nach einem oder mehreren der Ansprüche 1 bis 5, dadurch gekennzeichnet, daß das Gehäuse (43) über Wälzlager (46a, 46b) drehbar gelagert ist.

7. Eckenschere nach einem oder mehreren der Ansprüche 1 bis 6, dadurch gekennzeichnet, daß die motorischen Antriebe (52, 53) über Über- oder Untersetzungsgetriebe (55) mit den Gewindespindeln (50) verbunden sind.

8. Eckenschere nach einem oder mehreren der Ansprüche 1 bis 10, dadurch gekennzeichnet, daß jeder Schlitten (41) aus einem in dem Führungskanal (39) der Führungsnut (21) angeordneten, vorzugsweise aus einem quaderförmigen Block bestehenden Unterteil (60) und einem auf dem Arbeitstisch (4) angeordneten, das Schneckenrad (42) tragenden, vorzugsweise ebenfalls aus einem im wesentlichen quaderförmigen Block bestehenden Oberteil (61) besteht, wobei das Unterteil (60) mit Laufrollen (62) auf der Unterseite der Führungsstege (36) und das Oberteil (61) mit Laufrollen (63) auf der Oberseite der Führungsstege (36), d. h. auf der Arbeitstisch-Oberfläche (4a), aufliegt und wobei das Oberteil (61) mit dem Unterteil (60) mittels den Führungsschlitz (37) durchragender Schrauben (64) verbunden ist.

9. Eckenschere nach Anspruch 8, dadurch gekennzeichnet, daß das Oberteil (61) und das Unterteil (60) des Schlittens (41) unter Zwischenlage von Federn, insbesondere Spiralfedern (65), miteinander verbunden sind.

10. Eckenschere nach Anspruch 8 oder 9, dadurch gekennzeichnet, daß das Oberteil (61) sowie das Unterteil (60) des Schlittens (41) in den in Verschieberichtung gesehen an ihre Vorder- und Hinterkanten angrenzenden Bereichen ihrer Unter- bzw. Oberseitenfläche formschlüssig in den Führungsschlitz (37) eingreifende Führungsansätze (66) aufweisen.

11. Eckenschere nach einem oder mehreren der Ansprüche 1 bis 10, dadurch gekennzeichnet, daß die an den Einstellköpfen (17) befestigten Anschlagleisten (16) in ihrer Länge verstellbar sind.

12. Eckenschere nach Anspruch 11, dadurch gekennzeichnet, daß die Anschlagleisten (16) teleskopartig ausziehbare Verschiebeleisten (68) aufweisen.

13. Eckenschere nach Anspruch 11 oder 12, dadurch gekennzeichnet, daß die Verschiebeleisten (68) jeweils eine zahnstangenartige Verzahnung (101) aufweisen, die mit einem über einen an dem Einstellkopf (17) befestigten motorischen Antrieb (97) antreibbaren Zahnritzel (99) in Eingriff steht.

14. Eckenschere nach einem oder mehreren der Ansprüche 1 bis 13, dadurch gekennzeichnet, daß die Untermesser (13, 14) an jeweils einem flachen, kreissegmentförmigen Messerhalter (75) in radialer Anordnung befestigt sind, wobei die Messerhalter (75) in der Ebene des Arbeitstisches (4) in einer kreisförmigen Tischausnehmung (76) derart gelagert und zueinander angeordnet sind, daß sie zueinander bezüglich der Mittellinie (27) des Arbeitstisches (4) spiegelsymmetrisch sind und zur Einstellung des Schneidenwinkels α zwischen den Untermessern (13, 14) auf einer Kreisbahn gegeneinander verschiebbar sind.

15. Eckenschere nach Anspruch 14, dadurch gekennzeichnet, daß die kreissegmentförmigen Messerhalter (75) an ihrer Peripherie Schneckenrad-Verzahnungen (78) aufweisen, die mit jeweils einer tangential angeordneten Schneckenantriebswelle (79) in Eingriff stehen.

16. Eckenschere nach Anspruch 14 oder 15, dadurch gekennzeichnet, daß zum Rotationsantrieb der Schneckenantriebswellen (79) jeweils ein motorischer Antrieb (81) vorgesehen ist, der vorzugsweise über einen Antriebsriemen (82) mit der jeweiligen Schneckenantriebswelle (79) in Verbindung steht.

17. Eckenschere nach einem oder mehreren der Ansprüche 14 bis 16, dadurch gekennzeichnet, daß in der Tischausnehmung (76) Führungsansätze (83) vorhanden sind, die in kreisbogenförmige Führungsausnehmungen (84) der Messerhalter (75) eingreifen.

18. Eckenschere nach einem oder mehreren der Ansprüche 1 bis 17, dadurch gekennzeichnet, daß die motorischen Antriebe (44, 52, 53, 73, 81) Elektromotoren, vorzugsweise numerisch steuerbare Schrittmotoren, sind.

19. Eckenschere nach Anspruch 18, dadurch gekennzeichnet, daß die Motoren (44, 52, 53, 73, 81) über Verbindungskabel fest mit einer programmierbaren numerischen Steuereinheit (7) verbunden sind.

## Claims

1. Corner shear (1) for notching or cutting out corners from plate-shaped materials, in particular metal sheets, having a work table (4) with a horizontal surface with preferably two pairs of cutters comprising upper (11, 12) and lower cutters (13, 14) which are mutually inclinable and form a V-shaped blade, and having at least one automatically adjustable stop means guided longitudinally displaceably in a guide groove (21) of the work table (4) and having an adjustment head (17) rotatable about a rotary shaft (23) perpendicular to the work table surface and a stop rail (16) arranged on the adjustment head (17), the adjustment head (17) being guidable with the rotary shaft (23) along the guide groove (21), characterized in that

(a) there is arranged on the adjustment head (17) a rotary drive motor (44) which is supported for rotation of the adjustment head (17) and the stop rail (16) via gearing means (42, 45) on a carriage (41),

(b) the gearing means comprise a worm wheel (42), fixed to the carriage (41) and concentric to the rotary shaft (23), and a worm shaft (45), mounted horizontally in a housing (43) of the adjustment head and connected to the motor, the worm shaft (45) acting tangentially on the worm wheel (42),

(c) the carriage (41) is mounted longitudinally displaceably via a motor drive (52 or 53) in the guide groove (21),

(d) a respective spindle drive (49) is provided for longitudinal displacement of the adjustment heads (17), and

(e) there is rotatably mounted in a guide channel (39) of each guide groove (21) a threaded spindle (50) which is frictionally connected to a motor drive (52, 53) arranged at the end of a web (34, 35) of the work table (4), and in that the threaded spindle (50) is in engagement with a threaded sleeve (54) rigidly connected to the carriage (41).

2. Corner shear according to claim 1, characterized in that the adjustment head (17) is made in the shape of a hood and the motor (44) and the stop rail (16) are arranged radially spaced from the rotary shaft (23) of the adjustment head (17).

3. Corner shear according to claim 1 or 2, characterized in that the two rectilinear guide grooves (21) provided in the work table surface (4a) for the longitudinal displacement of a respective adjustment head (17) enclose between them an angle of 90° and, with respect to the centre line (27) of the work table (4), extending in the plane of the work table surface (4a) and through the point (26) of the V-shaped blade, are arranged symmetrically and converging in the direction of the front edge (31) of the work table (4).

4. Corner shear according to one or more of claims 1 to 3, characterized in that the work table (4) has on its side edges (32, 33) extension webs (34, 35) for extending the guide grooves (21).

5. Corner shear according to one or more of claims 1 to 4, characterized in that each guide groove (21), as seen in cross-section starting from the work table surface (4a), extends perpendicularly into the work table (4) and is extended below the work table surface (4a) on both sides as far as a guide channel (39) of preferably rectangular cross-section such that the guide channel (39) is delimited in the direction of the work table surface (4a) by two guide webs (36) mutually opposed in the plane of the work table (4) and forming a guide slit (37) therebetween.

6. Corner shear according to one or more of claims 1 to 5, characterized in that the housing (43) is rotatably mounted by means of rolling bearings (46a, 46b).

7. Corner shear according to one or more of claims 1 to 6, characterized in that the motor drives (52, 53) are connected to the threaded spindles (50) via step-up or step-down gearing mechanisms (55).

8. Corner shear according to one or more of claims 1 to 7, characterized in that each carriage (41) comprises a lower part (60) which is arranged in the guide channel (39) of the guide groove (21) and preferably comprises a cuboid block, and an upper part (61) which is arranged on the work table (4), carries the worm wheel (42) and preferably also comprises a substantially cuboid block, the lower part (60) being supported by means of rollers (62) on the under side of the guide webs (36) and the upper part (61) being supported by means of rollers (63) on the upper side of the guide webs (36), i. e. on the work table surface (4a), and the upper part (61) being connected to the lower part (60) by means of screws (64) passing through the guide slit (37).

9. Corner shear according to claim 8, characterized in that the upper part (61) and the lower part (60) of the carriage (41) are connected to one another with springs, in particular flat coil springs (65), located therebetween.

10. Corner shear according to claim 8 or 9, characterized in that the upper part (61) and the lower part (60) of the carriage (41) have, in the regions of their under and upper side face respectively bordering on their front and rear edges as seen in the direction of displacement, guide extensions (66) engaging with form closure in the guide slit (37).

11. Corner shear according to one or more of claims 1 to 10, characterized in that the stop rails (16) secured to the adjustment heads (17) are adjustable in their length.

12. Corner shear according to claim 11, characterized in that the stop rails (16) have displacement rails (68) extensible in the manner of a telescope.

13. Corner shear according to claim 11 or 12, characterized in that the displacement rails (68) each have a toothedracklike toothing (101) which is in engagement with a pinion (99) drivable via a motor drive (97) secured to the adjustment head (17).

14. Corner shear according to one or more of claims 1 to 13, characterized in that the lower cutters (13, 14) are secured in radial arrangement to a respective flat, circle segment-shaped cutter holder (75), the cutter holders (75) being mounted in the plane of the work table (4) in a circular table cutout (76) and arranged with respect to one another such that they have a mirror symmetry to one another in respect of the centre line (27) of the work table (4) and are displaceable with respect to one another on a circular path for adjustment of the cutting angle α between the lower cutters (13, 14).

15. Corner shear according to claim 14, characterized in that the circle segment-shaped cutter holders (75) have on their periphery worm wheel toothings (78) which are in engagement with a respective, tangentially arranged worm drive shaft (79).

16. Corner shear according to claim 14 or 15, characterized in that, for rotary driving of the worm drive shaft (79), there is provided a respective motor drive (81) which is preferably connected via a drive belt (82) to the respective worm drive shaft (79).

17. Corner shear according to one or more of claims 14 to 16, characterized in that there are present in the table cutout (76) guide extensions (83) which engage in arc-shaped guide cutouts (84) in the cutter holders (75).

18. Corner shear according to one or more of claims 1 to 17, characterized in that the motor drives (44, 52, 53, 73, 81) are electric motors, preferably numerically controllable stepping motors.

19. Corner shear according to claim 18, characterized in that the motors (44, 52, 53, 73, 81) are fixedly connected via connecting cables to a programmable numerical control unit (7).

**Revendications**

1. Cisaille d'angle (1) pour l'encochage ou le découpage d'angles dans des matériaux en forme de plaque, en particulier des tôles, avec une table de travail (4) avec une surface horizontale avec avantageusement deux paires de couteaux constituées de couteaux supérieurs (11, 12) et inférieurs (13, 14) qui sont disposés de façon à pouvoir faire un angle l'un par rapport à l'autre et former une cisaille en forme de V, et avec au moins une installation de butée réglable automatiquement, guidée et déplaçable longitudinalement dans une rainure de guidage (21) de la table de travail, avec une tête de réglage (17) montée rotative sur un arbre rotatif perpendiculaire à la surface de la table de travail et une règle de butée (16) disposée sur la tête de réglage (17), la tête de réglage (17) avec l'arbre rotatif (23) pouvant être guidée le long de la rainure de guidage (21),
caractérisée en ce que
   a) sur la tête de réglage (17) est disposé un moteur d'entraînement rotatif (44) qui prend appui sur un chariot (41) pour assurer par un engrenage (42, 45) la rotation de la tête de réglage (17) et de la règle de butée (16),
   b) l'engrenage est constitué d'une roue à vis tangente (42) disposée fixe sur le chariot (41), concentriquement à l'arbre de rotation (23) et d'une broche filetée (45) horizontale liée au moteur, tourillonnée dans un boîtier (43) de la tête de réglage, la broche filetée (45) étant en prise tangentiellement avec la roue à vis tangente (42),
   c) le chariot (41) est monté déplaçable longitudinalement par un entraînement moteur (52 ou 53) dans la rainure de guidage,
   d) une commande à broche (49) est prévue pour le déplacement longitudinal de chaque tête de réglage (17), et
   e) dans un canal de guidage (39) de chaque rainure de guidage (21) est montée à rotation une broche filetée (50), qui est connectée positivement à un entraînement moteur (52, 53) disposé à l'extrémité d'un bras (34, 35) de la table de travail (4), et la broche filetée (50) est en prise avec une douille filetée (54) fixée rigidement au chariot (41).

2. Cisaille d'angle selon la revendication 1, caractérisée en ce que la tête de réglage (17) est réalisée en forme de capot, et le moteur (44) ainsi que la règle de butée (16) sont disposés à un écart radial de l'arbre rotatif (23) de la tête de réglage (17).

3. Cisaille d'angle selon la revendication 1 ou la revendication 2, caractérisée en ce que les deux rainures de guidage rectiligne (21) prévues dans la surface (4a) de la table de travail pour le déplacement longitudinal des têtes de réglage (17) forment entre elles un angle d'avantageusement 90° et sont disposées symétriquement par rapport à la ligne médiane (27) de la table de travail (4) passant dans le plan de la surface (4a) de la table de travail et par la pointe (26) de la cisaille en forme de V, et convergent en direction de l'arête avant (31) de la table de travail (4).

4. Cisaille d'angle selon une ou plusieurs des revendications 1 à 3, caractérisée en ce que la table de travail (4) présente des bras (34, 35) sur ses arêtes latérales (32, 33) pour le prolongement des rainures de guidage.

5. Cisaille d'angle selon une ou plusieurs des revendications 1 à 4, caractérisée en ce que chaque rainure de guidage (21) vue en coupe s'étend perpendiculairement vers l'intérieur de la table de travail (4) à partir de la surface (4a) de la table de travail et s'élargit sous la surface (4a) de la table de travail des deux côtés en un canal de guidage (39) avantageusement à section rectangulaire, de façon telle que le canal de guidage (39) est limité en direction de la surface (4a) de la table de travail par deux règles de guidage (36) en vis à vis l'une de l'autre dans le plan de la table de travail (4), ces règles formant entre elles une fente de guidage (37).

6. Cisaille d'angle selon une ou plusieurs des revendications 1 à 5, caractérisée en ce que le boîtier (43) est monté à rotation sur des paliers à rouleaux (46a, 46b).

7. Cisaille d'angle selon une ou plusieurs des revendications 1 à 6, caractérisée en ce que les entraînements moteurs (52, 53) sont connectés aux broches filetées (50) par engrenages (55) multiplicateurs ou réducteurs.

8. Cisaille d'angle selon une ou plusieurs des revendications 1 à 7, caractérisée en ce que chaque chariot (41) est constitué d'une partie inférieure (60) constituée avantageusement d'un bloc parallélépipédique disposé dans le canal de guidage (39) de la rainure de guidage (21) et d'une partie supérieure (6) constituée également avantageusement d'un bloc sensiblement parallélépipédique, disposé sur la table de travail (4) et portant la roue à vis tangente (42), la partie inférieure (60) étant appliquée par des rouleaux de roulement (63) sur la face supérieure de la règle de guidage (36), c'est-à-dire sur la surface (4a) de la table de travail, et la partie supérieure (61) étant connectée à la partie inférieure (60) au moyen de vis (64) traversant la fente de guidage (37).

9. Cisaille d'angle selon la revendication 8, caractérisée en ce que la partie supérieure (61) et la partie inférieure (60) du chariot (41) sont connectées ensemble par l'intermédiaire de ressorts, en particulier ressort-spirale (65).

10. Cisaille d'angle selon la revendication 8 ou la revendication 9, caractérisée en ce que la partie supérieure (61) ainsi que la partie inférieure (60) du chariot (41) présentent dans les zones adjacentes à leurs arêtes avant et arrière, vu en direction du déplacement, de leurs surfaces latérales inférieure ou supérieure, des bossages de guidage engagés de façon positive dans la fente de guidage (37).

11. Cisaille d'angle selon une ou plusieurs des revendications 1 à 10, caractérisée en ce que les règles de butée (16) fixées aux têtes de réglage (17) sont réglables en longueur.

12. Cisaille d'angle selon la revendication 11, caractérisée en ce que les règles de butée (16) présentent des règles déplaçables (68) pouvant sortir de façon téléscopique.

13. Cisaille d'angle selon la revendication 11 ou la revendication 12, caractérisée en ce que les règles déplaçables (68) présentent chacune une denture (10) du type crémaillère qui est en engrenage avec un pignon denté (99) pouvant être mu par un entraînement moteur (97) fixé à la tête de réglage (17).

14. Cisaille d'angle selon une ou plusieurs des revendications 1 à 13, caractérisée en ce que les couteaux inférieurs (13, 14) sont fixés chacun en disposition radiale sur un porte-couteau (75) plat en forme de segment de cercle, les porte-couteaux (75) étant articulés dans le plan de la table de travail (4) dans une découpure (76) en forme de cercle, et sont disposés l'un par rapport à l'autre de façon telle qu'ils soient symétriques l'un de l'autre par rapport à la ligne médiane (27) de la table de travail (4) et sont mobiles l'un par rapport à l'autre sur une trajectoire circulaire pour le réglage de l'angle de découpe α entre les couteaux inférieurs (13, 14).

15. Cisaille d'angle selon la revendication 14, caractérisée en ce que les porte-couteaux (75) en forme de segments de cercle présentent à leur périphérie des dentures (78) de roue à vis tangente, qui sont chacune en engrenage avec une broche filetée d'entraînement (79) disposée tangentiellement.

16. Cisaille d'angle selon la revendication 14 ou la revendication 15, caractérisée en ce que pour l'entraînement en rotation de chacune des broches filetées d'entraînement, il est prévu un moteur qui est en liaison avec chaque broche filetée (79) d'entraînement correspondante, avantageusement par une courroie d'entraînement (79).

17. Cisaille d'angle selon une ou plusieurs des revendications 14 à 16, caractérisée en ce que, dans la découpure (76) de la table, sont prévus des plots (83) qui sont engagés dans des cavités de guidage (84) du porte-couteau (75) en forme d'arc de cercle.

18. Cisaille d'angle selon une ou plusieurs des revendications 1 à 17, caractérisée en ce que les entraînements moteurs (44, 52, 53, 73, 81) sont des moteurs électriques, avantageusement des moteurs pas à pas à commande numérique.

19. Cisaille d'angle selon la revendication 18, caractérisée en ce que les moteurs (44, 52, 53, 73, 81) sont connectés de façon fixe par un câble de liaison à une unité de commande numérique programmable (7).

FIG. 1

FIG. 2

FIG. 3

FIG. 4

FIG. 5

FIG.6

FIG. 7

FIG.8

FIG. 9